# EUROPEAN PATENT APPLICATION

(11) **EP 1 443 770 A2**
(43) Date of publication of application: **04.08.2004**
(21) Application number: 03019359.3
(22) Date of filing: 27.08.2003
(51) Int. Cl.: H04N 7/26, H04N 7/24

(54) **Encoder and method for encoding**

(30) Priority: 29.01.2003 US 353488
(71) Applicant: Hewlett-Packard Development Company, L.P., Houston, TX 77070 (US)
(72) Inventor: Knapp, Verna E., Monmouth OR 97361 (US); Liu, Samson J., Menlo Park CA 94025 (US)
(74) Representative: Schoppe, Fritz, Dipl.-Ing.

(57) **Abstract**

An apparatus (150) may include elements (114), (116) to send a plurality of frame rate indications associated with a frame included in a first stream segment, to receive the plurality of frame rate indications, and to generate a non-predicted frame associated with a frame included in a second stream segment. A method may include reducing a time difference between a first stream segment and a second stream segment and combining the first stream segment and the second stream segment to provide a single stream. A method may also include encoding a first frame included in the single stream according to an associated first frame rate and encoding a second frame included in the single stream according to an associated second frame rate, wherein the second frame rate is different than the first frame rate.

## Description

### Background Information

Information, such as audio and visual information, may be available in the form of digitally encoded data. A single still picture can be represented as a sample of an analog image mapped onto a grid, referred to herein as a "frame". Moving pictures can be represented by a plurality of frames. Depending on the desired presentation format, both still and moving pictures may have sound tracks associated with them. To conserve memory, bandwidth, and other resources, still and moving pictures, along with their associated sound tracks, may be transmitted between locations as data streams encoded according to various compression standards, including those promulgated by the Moving Pictures Experts' Group.

It may be desirable to create a single data stream from a mixture of encoded still and moving picture stream segments, including associated sound tracks. However, several problems can occur related to combining data streams having different frame rates.

### Brief Description of the Drawings

FIG. 1 is a block diagram of an apparatus, an article including a machine - accessible medium, and a system according to various embodiments of the invention; and
FIG. 2 is a flow diagram illustrating a method according to an embodiment of the invention.

### Detailed Description

In the following detailed description of various embodiments of the invention, reference is made to the accompanying drawings that form a part hereof, and in which are shown by way of illustration, and not of limitation, specific embodiments in which the invention can be practiced. The embodiments illustrated are described in sufficient detail to enable those skilled in the art to practice the teachings disclosed herein. Other embodiments can be utilized and derived therefrom, such that structural and logical substitutions and changes can be made without departing from the scope of this disclosure. The following detailed description, therefore, is not to be taken in a limiting sense, and the scope of various embodiments of the invention is defined only by the appended claims, along with the full range of equivalents to which such claims are entitled.

Prior to their combination into a single stream, still and moving picture coded stream segments may be allocated to separate incoming data streams according to frame rates. For example, still picture segments may be assigned to a first incoming stream, moving picture segments having a ten frame-per-second (FPS) frame rate may be assigned to a second incoming stream, moving picture segments having a twelve FPS rate may be assigned to a third incoming stream, audio segments may be assigned to a fourth stream, and so forth.

Each video segment has a specified start time that should be aligned fairly closely w ith the associated audio track segment to prevent observable audio/video synchronization problems. However, because frame duration timing in various stream segments are not necessarily related, and because associated audio track segments should be synchronized, the first image in one segment may be presented while the last image from another segment is still being displayed. To maintain presentation continuity, therefore, frame display times may need to be shifted. Unfortunately, available encoders may not support active modification of still and moving picture input frame rates or stream segment timing.

For the purpose of clarifying discussion herein, several definitions are provided:
Frame - a single image, which may be a sample of an analog image mapped on a grid; a frame may be coded (e.g., compressed) or unencoded; a frame may be associated with a duration (e.g. display time), or a "frame rate", which may be defined as 1/duration.
Moving Pictures Experts Group (MPEG) Standards - includes one or more of Parts 1, 2, and 4 (and/or later parts) of the ISO/IEC JTC1/SC29/WG11 International Standard, such as, for example, Coding Of Moving Pictures And Associated Audio For Digital Storage Media At Up To About 1.5 Mbit/s, MPEG-1 International Standard, ISO/IEC 11172 Parts 1-5, 1993-1998; Generic Coding Of Moving Pictures And Associated Audio Information, MPEG-2 International Standard, ISO/IEC 13818 Parts 1-10, 1996-2000; and Coding of Moving Pictures and Audio, MPEG-4 International Standard, ISO/IEC JTC1/SC29/WG11 N4668, March 2002, each herein incorporated by reference in their entirety.
Moving Picture Segment - includes a plurality of non-identical frames, each associated with a different still picture.
Still Picture Segment - comprises one or more frames, each associated with the same still picture.
Single Stream - comprises one or more still picture segments, one or more moving picture segments, or any combination of still and moving picture segments; moving picture segments in a single stream may be associated with the same frame rate, or different frame rates.

An MPEG encoder compresses images with respect to space in a frame, and with respect to time across multiple frames. Using unencoded frames as a starting point, the encoder creates I (i.e., intra) frames, which are compressed with respect to space and not time, and P and B frames (i.e., unidirectionally predicted frames and bidirectionally predicted frames, respectively), which use data from other frames in the encoded stream, such as the I frames and other P and B frames, to reconstruct images. This allows compression of image samples with respect to time. The sequence of I, P, and B frames is referred to as a Group of Pictures (GOP) structure.

Encoders may be provided with stream segments that have a constant input frame rate. For example, if a still image is to be presented for 3 seconds at 30 FPS, the encoder will receive 90 copies of the image. If a moving picture with an original frame rate of 10 FPS is to be presented at an output frame rate of 30 FPS, the encoder will receive 3 copies of each frame. Some encoders may accept one frame rate in the input, and create the extra frames internally. Others may have the extra images generated externally. However, because these encoders expect a constant input frame rate, the extra input images are generated before submission to the encoder. Such activity can be time consuming, and may use extra processing in the encoder as well, especially when still and moving pictures are combined into a single stream.

Embodiments of the invention may take advantage of various techniques to reduce the amount of such processing for input stream segments, while substantially preserving the quality of the single output stream. A combination of these technique s allows each frame to be presented to the encoder one time.

The first technique involves aligning frame display times with each other in a way that preserves the duration of each frame in moving picture segments, while maintaining alignment with associated sound tracks. The start and stop times of each frame in a moving picture segment are calculated. When necessary, the times are shifted to allow a previous frame to be presented for the full display time. The display time for still picture segments may be adjusted to allow moving picture stream segments to start at their requested times.

The second technique transmits, for reception by an encoder, such as an MPEG encoder, a frame rate indication to signal a change in the encoded frame rate for incoming segments. In response, the encoder adjusts the number of encoded output frames created for each input frame to match the requirement generated by the received frame rate indication.

The third technique transmits, for reception by the encoder, a segment type indication to signal a change in the encoded segment type (e.g., still or moving picture) for incoming segments. In response, the encoder generates empty P and B frames for the duration of the still picture segment.

The fourth technique calls for the encoder to change its GOP structure so as to generate an I frame associated with the beginning of each still picture segment.

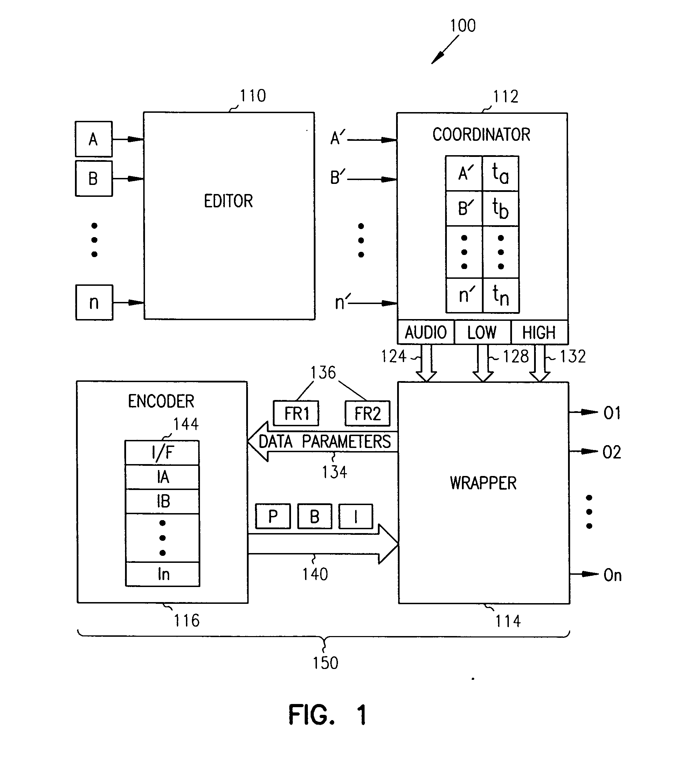

FIG. 1 is a block diagram of an apparatus, an article including a machine - accessible medium, and a system according to various embodiments of the invention. For example, in one embodiment, a system 100 includes an editor 110, a coordinator 112, a wrapper 114, and an encoder 116. Each of these components 110, 112, 114, and 116 is capable of being communicatively coupled to one or all of the others, as needed.

Multiple sources of original image data, in the form of segments, each segment having one or more frames, may be present. For example, original image data may include one or more moving picture segments A, one or more still picture segments B, and one or more associated audio segments n. The segments A, B, ... , n can be received by the editor 110, which associates time stamps (each time stamp including a start time and/or a stop time) with each frame included in the segments A, B, ... , n. The segments A, B, ..., n and their respective time stamps are shown as A', B', ... , n', respectively. The time-stamped segments A', B', ... , n' are sent to, and received by, the coordinator 112, perhaps in the form of one or more carrier waves.

The time stamp for one or more frames included in any or all of the segments A', B', ... , n' can be adjusted by the coordinator 112, if necessary. For example, the start time and/or the stop time in each frame of moving picture segments A', the still picture segments B', and/or the associated audio segments n' can each be changed to an earlier time, or a later time.

The moving picture segments A' may be allowed to move in time, but do not have their duration changed, although embodiments of the invention are not so limited. For example, a moving picture segment A' which starts at Tb = 1.00 minutes and stops at Te = 2.00 minutes might have the start and stop times changed to Tb = 1.15 minutes and Te = 2.15 minutes, respectively.

The still picture segments B' may be allowed to move in time, and their duration may be changed as needed, although embodiments of the invention are not so limited. For example, a still picture segment B' which starts at Tb = 2.25 minutes and stops at Te = 2.95 minutes might have the start time changed to Tb = 2.15 minutes, while the stop time Te remains the same. Audio segments n', associated with moving picture segments A' or still picture segments B' can have associated start and stop time adjusted in a similar fashion.

After one or more of the time stamps for the segments A', B', ..., n' are adjusted, the coordinator may create one or more single streams 124, 128, and 132, which includes the segments A', B', ..., and/or n', as well as the associated, adjusted time stamps ta, tb, ..., tn, respectively. The segments A', B', ..., n', and the associated, adjusted time stamps ta, tb, ..., tn can be assigned to any one or more of the streams 124, 128, 132, in any combination. For example, the audio segments n' and associated, adjusted time stamps tn can be assigned to an audio stream 124, although embodiments of the invention are not so limited. The moving picture segments A', and still picture segments B', and the associated, adjusted time stamps ta, tb can be assigned to a low resolution stream 128 or a high resolution stream 132, although embodiments of the invention are not so limited.

The single streams 124, 128, and 132 are sent to, and received by the wrapper 114, perhaps in the form of one or more carrier waves. The streams 124, 128, and 132 are then read by the wrapper 114, which sends the encoder 116 one or more initial parameters 134 to determine the output of the encoder 114, such as the output frame rate and encoding type, and then presents the encoder 116 with data 134 as requested. The data 134 and parameters 134 may be sent to, and received by the encoder 116 in the form of one or more carrier waves.

For example, the encoder 116 may request individual frames 136 included in any of the streams 124, 128, and 132 from the wrapper 114. Because of the manner in which the system 100 operates, each unique frame 136 may be sent to the encoder 116 from the wrapper 114 once, although embodiments of the invention are not so limited.

After processing by the encoder 116, the encoded data 140 is sent to, and received by the wrapper 114. The encoded data 140 is then placed into one or more output streams O1, O2, ... , On, which may in turn be written to files for use by other modules (not shown). Each of the output streams O1, O2, ..., On may have a single, substantially constant frame rate (e.g., as determined by the parameters 134), although embodiments of the invention are not so limited.

The encoder 116 may include an interface data area 144, which includes a plurality of input parameters and output parameters IA, IB, ..., In. Input parameters can be set for each incoming frame 136, and may include a pointer to the frame data, a segment type indication (e.g., whether the frame is included in a still picture segment, or a moving picture segment), a frame rate indication associated with the frame, a television encoding standard (e.g., NTSC or PAL), an input color format (e.g., RGB24 for an Apple® computer or RGB24 for a Windows® computer), an output width and height, an output frame rate, an encoding table specification, an aspect ratio, a time duration of a still picture segment (which allows the encoder to generate a set of I, P, and B frames to encode the entire still segment immediately), etc. Output parameters can also be set, a nd may include when data is to be written to a file, the location of the data, and requests for audio or video data, etc.

When a frame 136 is included in a still picture segment, the encoder 116 may immediately generate a non-predicted frame associated with the still picture segment, such as an I frame (i.e. an intra frame, as defined by the MPEG Standards). The encoder may also generate subsequent, empty B and P frames, as needed, which can result in reducing the bandwidth used by the output stream 140, as well as the processing performed by subsequent decoders (not shown).

Thus it can be seen that another embodiment of the invention includes an apparatus 150 comprising means 114 to send a plurality of frame rate indications IA associated with one or more frames FR1 included in a first stream segment A', and means 116 to receive the plurality of frame rate indications IA. One or more of the plurality of frame rate indications IA may be a number of frames per second.

The means 116 can be used to generate a non-predicted frame I associated with a frame FR2 included in a still picture segment B'. The apparatus 150 may also include means 116 to generate one or more empty predicted frames (e.g. B and/or P frames, as defined by the MPEG Standards) associated with the non-predicted frame I, as well as means 112 to adjust one or more time stamps ta associated with the first stream segment A'. As mentioned previously, one or more of the time stamps ta, tb, ..., tn may include a start time and/or a stop time.

The means 116 to receive the plurality of frame rate indications IA may also include means 144 to receive a segment type indication IB. The segment type indication IB can be selected from the group consisting of a still picture segment and a moving picture segment.

In another embodiment, a system 100 may include an editor module 110 to receive a plurality of stream segments A, B, ..., n. The editor module 110 may provide a time stamp associated with one or more frames included in one of the plurality of stream segments A, B, ..., n. The stream segments A, B, ..., n may comprise moving picture stream segments and still picture segments. Any moving picture stream segment (e.g., A) may have a different frame rate, or the same frame rate, as another moving picture stream segment (e.g., B). The system 100 may also include a coordinator module 112 to adjust the time stamps and to create one or more single streams 124, 128, 132 from the plurality of stream segments A, B, ..., n, as well as a wrapper module 114 to receive the single streams 124, 128, 132, and determine a plurality of encoding parameters IA, IB, ..., In.

The system 100 may also include an encoder module 116 to request one or more frames 136 from the wrapper module 114, and encode the frames 136 in accorda nce with the plurality of encoding parameters IA, IB, ..., In. The encoder module 116 may include an interface data area 144 to store the plurality of encoding parameters IA, IB, ..., In, which may include a plurality of input encoding parameters, such as a segment type and an output frame rate, and a plurality of output encoding parameters.

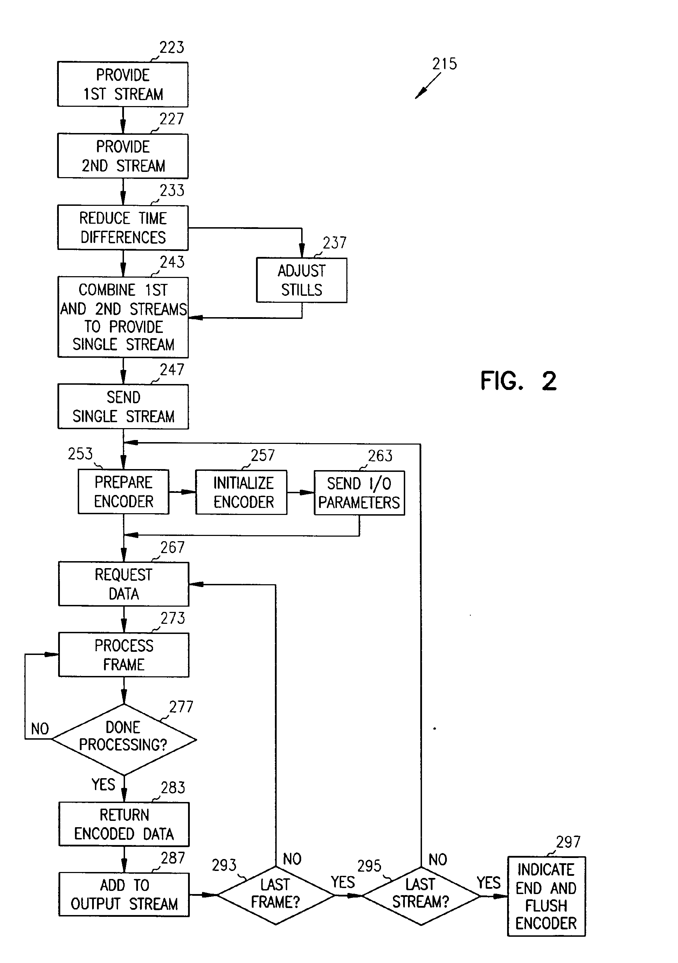

FIG. 2 is a flow diagram illustrating a method according to an embodiment of the invention. The method 215 may include providing a plurality of stream segments via a var iety of sources (e.g. computer workstations, or nodes included in a network, such as a global computer network, including the internet). Thus, the method 215 may include providing a first stream segment (e.g. a moving picture segment or a still picture segment) at block 223, and providing a second stream segment (e.g. a moving picture segment or a still picture segment) at block 227.

The method 215 may continue with reducing a time difference between the first and second stream segment at block 233. This may include, for example, adjusting a start time and/or a stop time associated with one or more frames included in either of the stream segments to an earlier time or a later time at block 237.

The method 215 may continue with combining the first and second stream segments to provide one or more single streams at block 243, and sending the single stream(s) for reception by a wrapper, for example, where the streams are read at block 247.

An encoder may be prepared to receive frame data at block 253, perhaps by initializing the encoder at block 257, and then sending input and output parameters to the encoder at block 263. Encoding may commence at block 267 with the request for data by the encoder.

Processing activity at block 273 may include sending a first frame included in the single stream, along with an associated first frame rate, for reception by the encoder, and encoding the first frame according to the associated first frame rate. Thus, frame rate indications, as well as segment type indications, associated with one or more frames in the single stream, can be received by the encoder. The frame rate indications may be different, or the same. Similarly, the segment type indications may be the same, or different. It should be noted that the first frame may be the first frame in a series of frames included in a moving picture segment, for example.

If processing of the first frame is not complete as determined at block 277, then processing continues at block 273. Otherwise, the encoded data for the first frame is returned from the encoder, perhaps to a wrapper, at block 283, where the encoded data is added to an output stream at block 293.

If processing is complete for the last frame in a segment, as determined at block 293, then the method 215 may continue at block 295. Otherwise, the method 215 may continue with a request for more data at block 267. Processing activity at block 273 may include sending a second frame included in the single stream, along with an associated second frame rate, for reception by the encoder, and encoding the second frame according to the associated second frame rate. The first and second frame rates may be the same, or different. The second frame may be a still frame, or the first frame in another series of frames included in a second moving picture segment, for example. Encoding may be accomplished in accordance with any number of standards, including MPEG standards, such as MPEG-1, MPEG-2, and/or MPEG-4, or other versions of MPEG standards, or other standards, such as International Telecommunications Union standards ( ITU-T standards), including the H.261 and H.263 standards, incorporated herein in their entirety by reference.

If processing the second frame is not complete as determined at block 277, then processing continues at block 273. Otherwise, the encoded data for the second frame is returned from the encoder, perhaps to a wrapper, at block 283, where the encoded data is added to the output stream at block 293. If processing is complete for the last fame in the segment, as determined at block 293, then the method 215 may continue at block 295. Otherwise, the method 215 may continue with a request for more data at block 267, as described previously. For example, processing activity at block 273 may include sending a third frame included in the single stream, for reception by the encoder (wherein the third frame is included in a still picture segment, for example), and generating a non-predicted frame (e.g., an intra, or I frame) associated with the third frame. Processing activity at block 273 may also include generating one or more empty predicted frames (e.g., B and/or P frames) associated with the third frame. Typically, although embodiments of the invention are not so limited, the third frame is sent to the encoder one time. Moreover, the third frame can be sent to an encoder a first number of times less than a second number of times a corresponding set of frames is generated by the encoder. For example, an individual frame may be sent twice to the encoder, even though ninety I, B, and/or P frames are generated by the encoder.

If the end of the single stream is determined at block 295, the method 215 may conclude with sending an end of stream indication to the encoder, and flushing the encoder of remaining encoded data at block 297.

It should be noted that the methods described herein do not have to be executed in the order described, or in any particular order. Moreover, various activities described with respect to the methods identified herein can be executed in serial or parallel fashion. Information, including frames, parameters, commands, and other data can be sent and received in the form of one or more carrier waves.

The system 100, editor 110, coordinator 112, wrapper 114, encoder 116, streams 124, 128, 132, interface 144, and apparatus 150 can all be characterized as "modules" herein. Such modules can include hardware, circuitry, and/or a microprocessor and/or memory circuits, software program modules, and/or firmware, and combinations thereof, as desired by the architect of the system 100 and apparatus 150, and appropriate for particular embodiments of the invention. For example, the editor 110, coordinator 112, wrapper 114, and encoder 116 can be grouped into a single hardware and/or software and /or firmware module, or into any arbitrary number of such modules (e.g., two, three, four, or more), as desired.

One of ordinary skill in the art will understand, after reading this disclosure, that the apparatus and systems of various embodiments of the invention can be used in applications other than for audiovisual presentations, and thus, embodiments of the invention are not to be so limited. The illustrations of a system 100 and an apparatus 150 are intended to provide a general understanding of the structure of various embodiments of the invention, and they are not intended to serve as a complete description of all the elements and features of apparatus and systems which might make use of the structures described herein.

Applications which can include the novel apparatus and systems of various embodiments of the invention include electronic circuitry and software used in high-speed computers, communication and signal processing circuitry, modems, processor modules, embedded processors, and application-specific modules, including multilayer, multi-chip modules. Such apparatus and systems can further be included as sub-components within a variety of electronic systems, such as televisions, cellular telephones, fax machines, personal computers, radios, vehicles, and others.

Thus, it is now easily understood that another embodiment of the invention can include an article 100, such as a computer, a memory system, a magnetic or optical disk, some other storage device, and/or any type of electronic device or system, comprising a machine-accessible medium 150 (e.g., a memory including an electrical, optical, or electromagnetic conductor) having associated data 110, 112, 114, and/or 116 (e.g., computer program instructions), which when accessed, results in a machine operating performing activities which involve reducing a time difference between a first stream segment and a second stream segment, combining the first stream segment and the second stream segment to provide a single stream, receiving a first frame included in the single stream along with an associated first frame rate at an encoder, encoding the first frame according to the associated first frame rate, receiving a second frame included in the single stream along with an associated second frame rate at the encoder, and encoding the second frame according to the associated second frame rate. As noted previously, the first and second frame rates can be different, or the same.

Reducing the time difference between the first stream segment and the second stream segment may include adjusting a start time associated with the second stream segment to an earlier time or a later time. Encoding the first frame according to the associated first frame rate may include encoding the first frame in accordance with an MPEG standard. Other activities may involve receiving a first segment type indication associated with the first frame at the encoder, and receiving a second segment type indication associated with the second frame at the encoder. The first and second segment type indications can be different, or the same.

Although specific embodiments have been illustrated and described herein, those of ordinary skill in the art will appreciate that any arrangement calculated to achieve the same purpos e can be substituted for the embodiments shown. This disclosure is intended to cover any and all adaptations or variations of various embodiments of the invention. It is to be understood that the above description has been made in an illustrative fashion, and not a restrictive one. Combinations of the above embodiments, and other embodiments not specifically described herein will be apparent to those of skill in the art upon reviewing the above description. The scope of various embodiments of the invention includes any other applications in which the above structures and methods are used. Therefore, the scope of various embodiments of the invention should be determined with reference to the appended claims, along with the full range of equivalents to which such claims are entitled.

It is emphasized that the Abstract is provided to comply with 37 C.F.R. §1.72(b), which requires an Abstract that will allow the reader to quickly ascertain the nature of the technical disclosure. It is submitted with the understanding that it will not be used to interpret or limit the scope or meaning of the claims.

In the foregoing detailed description, various features are grouped together in a single embodiment for the purpose of streamlining the disclosure. This method of disclosure is not to be interpreted as reflecting an intention that the claimed embodiments of the invention require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate preferred embodiment.

## Claims

1. An apparatus (150), comprising:
means (114) to send a plurality of frame rate indications associated with a frame included in a first stream segment; and
means (116) to receive the plurality of frame rate indications and to generate a non-predicted frame associated with a frame included in a second stream segment.

2. The apparatus of claim 1, further comprising:
means (116) to generate an empty predicted frame associated with the non-predicted frame.

3. The apparatus of claim 1, further comprising:
means (112) to adjust a time stamp associated with the frame included in the first stream segment.

4. A system (100), comprising:
an editor (110) to receive a plurality of stream segments and to provide a time stamp associated with a frame included in one of the plurality of stream segments;
a coordinator (112) to adjust the time stamp and to create a single stream from the plurality of stream segments;
a wrapper (114) to receive the single stream and to determine a plurality of encoding parameters; and
an encoder (116) to request the frame from the wrapper (114) and to encode the frame in accordance with the plurality of encoding parameters.

5. The system (100) of claim 4, wherein the plurality of stream segments includes a first moving picture stream segment having a first frame rate and a second moving picture stream segment having a second frame rate.

6. The system (100) of claim 4, wherein the encoder (116) includes an interface data area (144) to store the plurality of encoding parameters.

7. A method, comprising:
reducing a time difference between a first stream segment and a second stream segment;
combining the first stream segment and the second stream segment to provide a single stream;
encoding a first frame included in the single stream according to an associated first frame rate; and
encoding a second frame included in the single stream according to an associated second frame rate, wherein the second frame rate is different than the first frame rate.

8. The method of claim 7, further comprising:
sending a third frame included in the single stream to an encoder (116), wherein the third frame is included in a still picture segment; and
generating a non-predicted frame associated with the third frame.

9. The method of claim 8, wherein the third frame is sent to the encoder (116) a first number of times less than a second number of times a corresponding set of frames is generated by the encoder.

10. A method, comprising:
reducing a time difference between a still picture segment and a moving picture segment;
combining the still picture segment and the moving picture segment to provide a single stream;
encoding a first frame included in the still picture segment; and
encoding a second frame included in the moving picture segment according to an associated frame rate.
